# EUROPEAN PATENT APPLICATION

(11) **EP 0 851 364 A2**
(43) Date of publication of application: **01.07.1998**
(21) Application number: 97201204.1
(22) Date of filing: 22.04.1997
(51) Int. Cl.: G06F 17/00

(54) **File distribution system**

(30) Priority: 24.12.1996 NL 1004894
(71) Applicant: Koninklijke PTT Nederland N.V., 9726 AE Groningen (NL)
(72) Inventor: Meijer, Robert Jan, 9723 AB Groningen (NL)
(74) Representative: Beitsma, Gerhard Romano

(57) **Abstract**

System for distributing files, comprising a transmission network to which there are connected both hosts and terminals. To the transmission network (1) there is connected a broadcast server (4) which is further connected to a broadcast system (5). The terminals (3) are connected to receiving means (6). Files originating from hosts are presented, by way of the transmission network, to the broadcast server, which broadcasts said files, by way of the broadcast system, to the receiving means. The latter present the files to the terminals under control of a selection member (8) in which characteristics of the files received are compared with characteristics contained in the selection member. The transmission system is formed, e.g., by the so-called Internet or system corresponding thereto. The file characteristics may be formed by the so-called URLs.

## Description

### A. BACKGROUND OF THE INVENTION

The invention relates to a system for distributing files. In particular, though not exclusively, in this context there is considered the distribution of currently so-called Internet pages, (worldwide) web pages or HTML pages (HTML = HyperText Markup Language).

Such pages contain information on very diverse topics. They are produced at various (computer) locations, or web sites. All these sites are connected to one another by means of a worldwide computer/telecommunication network ^{―} the Internet ^{―} in which the connected computer systems communicate with one another, making use of, e.g., the TCP/IP [Transmission Control Protocol/Internet Protocol], FTP (File Transfer Protocol), HTTP (HyperText Transfer Protocol) or POP (e-mail) protocol.

The various sites may be accessed by way of web servers (or access providers). For this purpose, a user with his system (PC, NC [Numerical Control], workstation) --by way of a PSTN [Public Switched Telephone Network] or an ISDN [Integrated Services Data Network]-- establishes a connection with the web server, whereafter web pages may be retrieved, searches are carried out in data bases, data is uploaded and software is downloaded.

Many pages are linked to one another by means of the link option frequently used in HTML pages. In this connection, the address of another page (an e-mail address, e.g., is also possible) is assigned to a word, figure or other element within such a page. By clicking said word (with the mouse), an attempt is made to access the page by way of the address assigned to it.

The addresses currently have the form of a URL (Uniform Resource Locator), the address where the page to be accessed is to be found. After selecting such a URL address, the user software ^{―} the browser ^{―} attempts to access the page with said address.

Apart from a browser (manually controllable by the user), there may also be made use of special search engines (e.g., net crawlers) which may periodically retrieve previously specified pages and transfer them to the user system. For this purpose, there is initially prepared a list of the URLs which must be periodically browsed. Of the pages which are browsed in this manner, it is detected whether or not they have been modified as compared to the last time they were browsed. The modified pages are transferred (copied) to the user system, and presented to the user. In this manner, the user is kept abreast of page updates without the user himself having to (manually) browse through the various pages which are of interest to him.

A general problem is that the Internet is relatively slow. Although work is continuously being carried out on the upgrading of the backbone, the physical telecommunication network and the servers the Internet makes use of, still the increasing use of the Internet, both in the supply of information and services, and in the demand therefor, as well as the size of files retrieved, particularly the downloadable software files, are causing the response times on the Internet to be considerable.

To reduce this problem, it has been proposed (see reference), wherever possible to have downstream transmission carried out by a fast medium and upstream transmission by a slower medium. In the event of data transmission, this is a known principle per se. In this context it has been proposed to have the users transfer their selections (URL, FTP, e-mail addresses etc.) by way of a telephone or data network and the (downstream) response thereto by means of a (satellite) broadcasting system. Downloading by means of broadcasting may take place at a transmission rate of as high as 40 Mbit/sec.

### B. SUMMARY OF THE INVENTION

The invention elaborates on the option of transferring downstream data by way of a broadcasting system, together with the option of automatically updating URLs, as also indicated in the above.

According to the invention, the entire supply of Internet pages, or at least a major part thereof, is broadcast so that said broadcast pages may be received and downloaded by all potential receivers, or at least a major part thereof. Since usually it is not possible to store the entire supply locally, there must therefore be made a selection from the supply. The system according to the invention therefore comprises, in addition to means for broadcasting files centrally and receiving them locally, selection means per location for selecting a subset of all files broadcast. The selection criteria may be formed, e.g., by the file addresses, in this case the URLs of the Internet pages.

It should be noted that in the system disclosed in the reference below, there also takes place a selection of signals broadcast. After all, cryptographic techniques are used there to restrict the number of potential users who may decrypt the signal. Therefore, it concerns a restriction of the number of users there, while in the present invention it concerns a restriction of the quantity of files which may be stored locally. Apart from the restriction (of the recall), it is also achieved that the files stored match, as closely as possible (high precision), the interest profile of the local user defined, e.g., in URLs.

Having said this, it is possible, as is known per se, both to restrict the user group by means of, e.g., encryption techniques, and to filter the files received using, e.g., the URLs.

Not only URLs are useful as a selection means. Also, the files received might be searched full-text for the occurence of specific text elements, e.g., key words. Another option is that, e.g., by the organisation which takes care of broadcasting, there are assigned to all files key words or other index terms, which may serve as selection terms at the receiving end.

In itself, it is also possible not to broadcast the entire Internet supply, but only part thereof. It is a known fact that about 80% of the local users are only interested in about 20% of the total supply. By always broadcasting the most popular files from the entire supply, there will already be obtained a considerable relief of the current (slow) network. It will be clear that the list of the most popular files must be continuously updated. This is possible by recording the requests and therefrom computing the "top 20".

### C. EXEMPLARY EMBODIMENTS

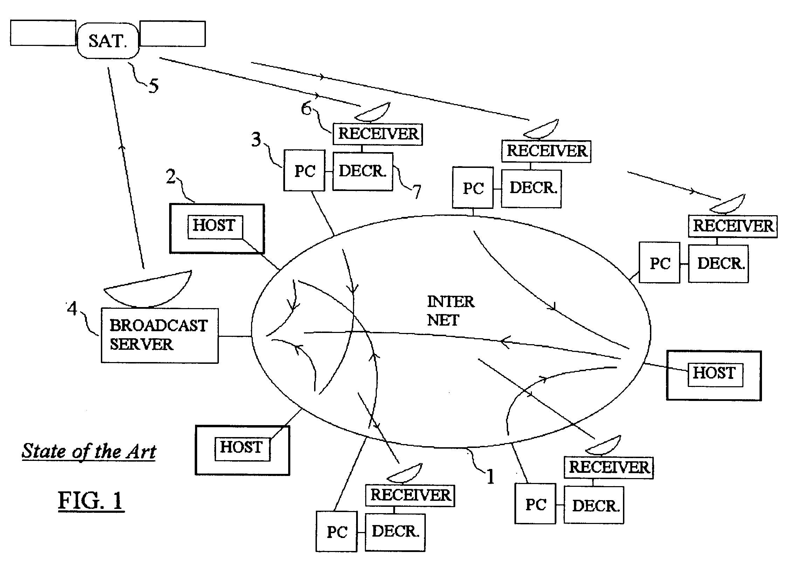

FIG. 1 illustrates the prior art as given in the reference below. By way of the Internet, there are connected a large number of host computers to a large number of user PCs. These are connected to the Internet by way of an Internet access server, which is accessible by the PC either by way of a modem and the public telephone network or by way of the ISDN network. Other connection options are also possible, e.g., if a PC is connected to an LAN [Local Area Network] by way of said LAN and an Internet gateway. All this is not shown in the drawing, since it is of no importance for the understanding of the invention, while the options of gaining access to the Internet by way of a PC are nowadays generally known.

To the Internet 1, there are also connected a large number of host computers 2, which are accessible by way of PCs 3 and may be activated, inter alia, to transfer files, such as informative files (pages) or executable files (software), to the PCs. In the figure, it is indicated that different PCs inform different host computers of which files are desired by the PCs. Although such is an interactive process, under control of the TCP/IP protocol, it is represented in the figure as (see arrow direction) a data flow from the PCs to the host computers. Said reference discloses that the host computers may transmit the required files to the PCs by way of a satellite. A file retrieved by a PC is then first transferred from the host computer to a broadcast server 4, which in its turn transfers the file to the PC by way of a communication satellite 5. By way of a satellite receiver 6 connected to the PC, the retrieved file may be received and, after decryption (7), be transferred to the PC. Downstream transfer of a retrieved file therefore takes place by way of the path: host ^{―} broadcast server ^{―} satellite ^{―} local receiver ^{―} PC. By encryption at the transmitting end and decryption at the receiving end, it is achieved that the file intended for a specific PC (or group of PCs) therefore arrives only at that PC (or group).

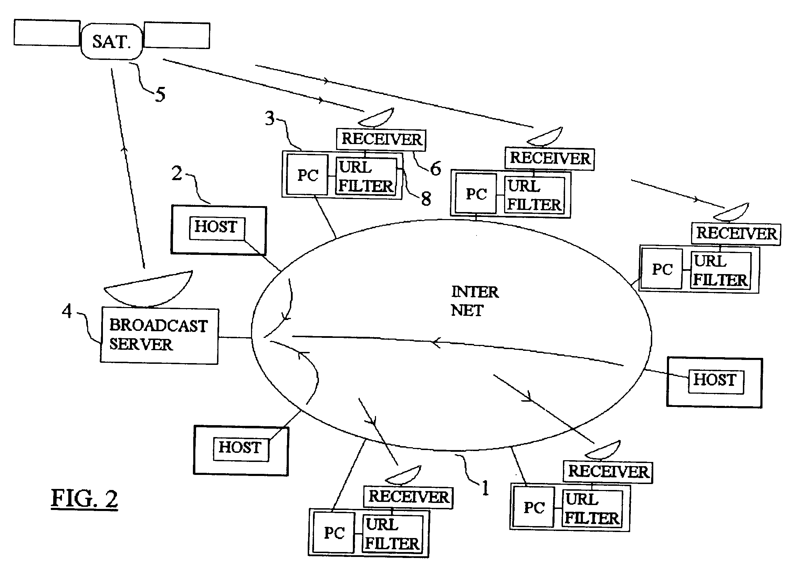

FIG. 2 illustrates the present invention. It is assumed that the users know which URLs are of importance to them. Based on previous Internet sessions, the users were thus able to compose an interest profile, expressed in (interesting) URLs. These are stored in a selection file in the PC, denoted in the figure as URL filter. The various hosts regularly, e.g., once every 24 hours, transmit either their complete collection of files available to the Internet, or the most frequently queried one thereof, to the broadcast server. All of these files are received there, and are then consecutively, by way of one or more satellites, broadcast (full-text and with any additions such as search terms etc.). The satellite receivers connected to the PCs receive all files transmitted by the broadcast server. In each PC, the URLs of each consecutively received file are compared to the URLs in the selection file ^{―} the URL filter. Only those broadcast files whose URL matches one of the URLs in the URL filter are passed on to the PC and stored in a background memory thereof (e.g., the hard disk). The PC is thus regularly provided with the most recent versions of all files which are of interest to that PC user. In this manner, it is achieved that on the one hand the user always disposes of the most recent version, while on the other hand the permanent backbone of the Internet is dramatically relieved.

It should be noted that the downloading of files, as proposed above, may also take place by way of other, suitable broadcast media. In this context in particular, there may be considered the media through which radio and TV programmes are also broadcast, both the wireless media, whether or not by way of satellites, and the cable media (cable TV). As to the latter medium, it will be clear that, if the cable-TV network is also suitable for transmitting upstream signals (required, inter alia, for interactive TV, or for speech or data transmission by way of the cable-TV network), said network may also be regarded as a backbone for the Internet. In this case, PC users may therefore access hosts in the usual manner by way of (inter alia) the cable-TV network while, after they have specified a URL filter, they receive updates of all desired files by means of broadcasting, e.g., by way of (inter alia) that same cable-TV network.

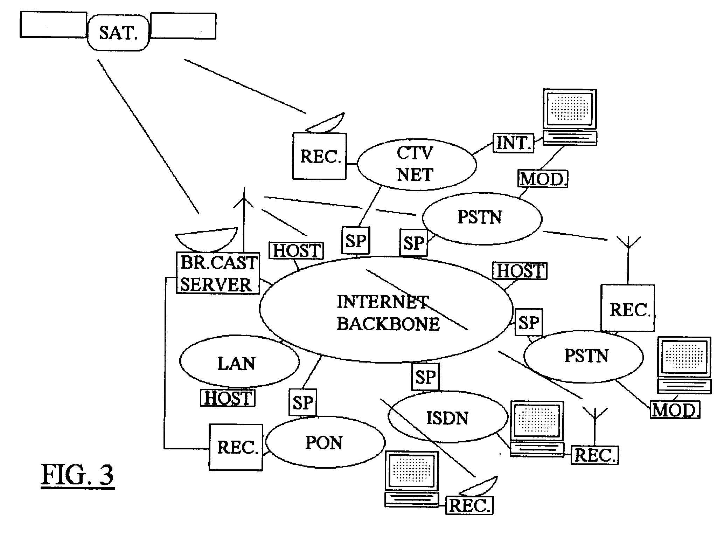

FIG. 3 illustrates a further number of elaborations of the invention. On an Internet backbone network, there are connected a number of Internet hosts and a number of Internet service providers (SP). It may be that a host is not directly connected to the backbone, but by way of another network, e.g., an LAN. By way of a local or regional network, e.g., a PON (Passive Optical Network), a conventional telephone or data network (PSTN), the ISDN, or a CATV (cable-TV) network, PC users may establish a connection with a service provider (SP). For this purpose, there is made use of a modem (MOD.) or another interface (INT.), depending on the local network. By way of their service provider, the users may contact the various hosts, making use of their browser, search engines etc. As a result of such session, the users record in their PC the URLs in which they are interested, or of which they would like to receive the latest version. Since particularly the downloading of sizable files takes considerable time, it is possible, according to the invention, to obviate this by placing the URLs of the files in question in the URL filter. Said URL filter is in the form of a list in the PC, which may be read out by simple software suitable for this purpose. If it is not certain in advance whether the host, which must supply the file deemed of interest, will broadcast it straight away, the user will inform that host that the required file must be broadcast at the next broadcasting session. Said request is then recorded in the host in a request-to-broadcast file. Once or several times per 24 hours, the files released for public Internet use from the various hosts are broadcast. These may be all public files, or only those files for which a request to broadcast was received. A good option is to always broadcast the most popular files, complemented by the files not included in this category for which a request to broadcast was received. It also is a good option to broadcast all, or only the most popular, files in so far as these exceed a specific size, e.g., all files exceeding 1 Mb. In the example of FIG. 3, the broadcast server is provided with both an antenne for satellite transmission and an antenne for terrestrial transmission. In this example, the satellite signals are received by a receiver connected to a cable-TV (CATV) network, while a terrestrial receiver is connected to a local PSTN by which, incidentally, there may also be transferred wide-band signals, making use of ADSL [Asymmetric Digital Subscriber Loop] techniques. The broadcasting need not necessarily take place by way of wireless transmission; in itself, it is just as well possible to broadcast by wire. To indicate this, there is drawn a cable connection between the broadcast server and a receiver which is connected to the local PON. To all local networks, there are connected users with their PCs and/or other communicating means (telephone, fax, radio, TV etc.). The Internet files broadcast may thus be received by various receivers --central or private, terrestrial or satellite receivers-- and passed on to user PCs. In the PCs, the signals received, i.e., the URLs of the Internet files detected by the receivers, are compared to the URLs stored in the URL filter (which may therefore be different for each user). Only if the URL of a detected file figures in the list of the URL filter, the file is admitted to the PC and stored therein (or immediately processed). Since each PC has its own URL list, each PC makes its own selection from the total of files broadcast.

Finally, it should be noted that, just as on the basis of URLs, there may also be made a selection using other characteristics. Thus, e.g., in itself it is possible to select using the contents of each file broadcast, using specific contents characteristics. In the event of a text file, this might be the occurrence of specific words or word combinations. This does require a great deal from the processing speed of the PCs, since these must scan the entire file presented in a short period of time, namely, before the next file presents itself. Although therefore at the present time this would not appear too suitable an option, it should nevertheless not be ruled out. Thus, there are more selection criteria to be found on which the files presented may be searched. It continues to be essential that a large number of files be broadcast, while locally the user (or user group) makes a selection from the supply with the help of a characteristics filter.

### D. REFERENCE

### Arcidiacono, A.

Multimedia services and data broadcasting via satellite Int. Broadcasting Convention (Conf. Publ. No. 428), IEEE, pp. 127-8, 1996

## Claims

1. System for distributing files, comprising a transmission network to which there are connected both hosts and terminals, characterised in that to the transmission network (1) there is connected a broadcast server (4) which is further connected to a broadcast system (5); that the terminals (3) are connected to receiving means (6) for receiving signals broadcast by the broadcast system; with files originating from hosts being presented, by way of the transmission network, to the broadcast server which broadcasts said files to the receiving means by way of the broadcast system; with the receiving means presenting the files to the terminal connected thereto under control of a selection member (8) in which characteristics of the files received are compared with the characteristics contained in the selection member.

2. System according to claim 1, characterised in that the transmission system is formed by the so-called Internet or system corresponding thereto.

3. System according to claim 2, characterised in that characteristics are formed in said file by the so-called URLs or characteristics corresponding thereto.

4. System according to claim 1, characterised in that the broadcast system is a satellite-broadcast system.

5. System according to claim 1, characterised in that the broadcast system is a terrestrial broadcast system.

6. System according to claim 1, characterised in that the receiving means are formed by local receivers (6), each connected to a local terminal.

7. System according to claim 1, characterised in that the receiving means are formed by a central or regional receiving system to which various terminals are connected by way of a network (PSTN, CATV, ISDN, PON, LAN).
